# EUROPEAN PATENT APPLICATION

(11) **EP 2 189 945 A1**
(43) Date of publication of application: **26.05.2010**
(21) Application number: 08169673.4
(22) Date of filing: 21.11.2008
(51) Int. Cl.: G06T 17/30, G06K 9/64, G06T 7/00

(54) **Method of and arrangement for linking image coordinates to coordinates of reference model**

(71) Applicant: A&P ip B.V., 2266 LP Leidschendam (NL); Linnenbank, Andreas Christianus, 1501 AH Zaandam (NL)
(72) Inventor: Linnenbank, Andreas Christianus, 1501 AH, Zaandam (NL); van Dam, Peter Michael, 6845 HN, Arnhem (NL)
(74) Representative: Swinkels, Bart Willem

(57) **Abstract**

A method of linking image coordinates to coordinates in a reference model is disclosed. A hierarchical set of tricubic transformations is used to map reference model coordinates to real world coordinates and vice versa. This provides a unifying framework to compare and combine different computational models and different patients. Effectively this means that all corresponding anatomical point in all patients will have the same coordinate in the reference model.
The disclosed method could as well be regarded as a method of hierarchical spatial normalization of 3D medical (e.g. CT, MR) images of e.g. the thorax and the heart to facilitate image comparison by warping or elastic deformation of the image volume to e.g. a unit cube while maintaining the spatial relationships of the anatomy in the image volume.
The warping is done by tri-cubic interpolation and is guided by a Bezier surface with control points on the unit cube being moved in such a way that the Bezier surface approximates a bounding surface of the body or an organ.
After conversion of the original volumetric image to the unit cube registration becomes trivial.
Moreover, an application of this method to electrocardiographic imaging is also disclosed.

## Description

### Field of the invention

The present invention relates to the field of processing images.

In an embodiment, the invention also relates to the field of matching images of 3D anatomical volumes to reference volume models.

### Background of the invention

In many cases data from various imaging modalities have to be combined. A typical example is in the so called inverse computations, where the activation sequence and other parameters of the heart are estimated from surface electrocardiograms. This procedure needs at least the geometry of the heart, lungs and thorax but possibly much more detailed information as well to come to a reliable diagnosis. The cardiac imaging techniques that are used in clinical practice cover the heart but do not allow a sufficiently detailed reconstruction of the lungs and thorax from these imaging data alone. What is needed is a method to combine individual, patient specific data with general physiological knowledge.

In the same field of inverse computations, every heart constructed is unique. There do not yet exist standardized heart geometries. The hearts for different patients vary in number of nodes and connectivity.

When modeling a patient, special conditions like the fact that the lungs and the heart can not intersect in real space have to be taken into account. As an example, a part of the left lung has an approximately constant distance to the left ventricular free wall. Such conditions have to be imposed every time by hand.

The models used at present include surface descriptions with a widely varying number of triangles and volume descriptions by means of cubes, tetrahedrons, and hexahedrons. For some of the applications the description of the surface or the volume has to be extended with a description of the internal structures (such as fiber orientation, conduction system, or blood vessels). Some may also require additional meshes to be defined, like lungs and the body surface.

Presently, a coarse model can be constructed in a few days. An individual model that incorporates the realistic geometry of all organs may take weeks or even months to create. For the use of models in clinical practice and the verification of clinically obtained measurements this time is much too long. For experimental procedures creating the model should take at most an hour by a researcher. To be usable in routine clinical practice the geometries have to be reconstructed even faster.

The consequence of the fact that different meshing techniques have to be used for various computations is that results obtained in one application, e.g. inverse modeling of cardiac activation times, can not easily be used for another application, e.g. for mechanical deformation during the heart cycle. The combination of different analysis results is only possible when the heart models used can be matched.

There are many software tools that can deform meshes. Most of these are aimed at generating surface descriptions for the visible parts only and can't deal with internal organs. It is also hard to find one that will handle every kind of surface and volume description used in our groups (i.e. triangular and quadrangular meshes, tetrahedrons, hexahedrons etc.). There is a need that it should be possible to deform a set of various descriptions of the hearts at the same time, providing models which analysis results can be compared. For example, if one 300-vertex triangulation of the heart is matched to an MRI data set, the corresponding 2400-vertex description should be matched automatically. Moreover, defining the fiber orientation changes inside the deformed ventricular wall should be possible in the same system, and a deformation should be easily repeatable with an improved version of the mesh. Another requirement is that one should easily impose physiological constraints like moving the left ventricular free wall without changing its thickness and its distance to the left lung.

One of the problems encountered when trying to generate a patient-specific model from imaging data is that not every organ is scanned completely, let alone that the whole torso is scanned. MRI imaging takes much time and CT uses radiation. Only slices that are necessary for the clinical evaluation are therefore recorded. As a result, a standard procedure does not provide enough slices to reconstruct the body surface or the lungs and other internal organs. For example, a cardiac MRI normally only has slices that cut through the heart and maybe a few others. As a result, the right shoulder may not even be visible in any of the slices. Such image data does not provide sufficient information to derive a volume conduction model for use in surface algorithms that relate surface potentials to electrical events within the body, such as ECG, EEG, EMG and MCG.

### Summary of the invention

The present invention seeks to provide a framework where every for every patient an individual model can be derived from sensed data, such as MRI images, X-ray images, Ultrasound data, which individual model can be expressed in generic coordinates that will be the same for every model and for every patient.

According to the invention, the method of linking coordinates of an image to coordinates of a reference model, the method comprising:
a) acquiring an input image representing a boundary of a body of a living being and a boundary of at least one part within said body in an image reference system, coordinates in the image having a relationship with a real world reference system;
b) acquiring a reference model representative of a reference living being describing in a reference model coordinate system the boundary of the body of the reference living being and the boundary at least one part within said body, wherein the reference model comprises structural elements representative of the boundary of the body and the at least one part, a structural element having associated control elements, the control elements having predefined coordinates in the reference model coordinate system and defining the boundary of the structural element in the reference model coordinate system;
c) overlaying control elements and corresponding boundary of the structural element representative of the body on the input image, and assigning coordinates in the image reference system to the control elements;
d) a first adjustment to adjust the overlaid boundary of the structural element representative of the body on the input to approximate the boundary of the body of the living being in the input image by adjusting the coordinates of the control elements associated with said structural element in the image reference system;
e) a first transformation to transform the image area corresponding to the adjusted overlaid boundary to obtain an transformed image, the transformed image having coordinates in a transformed image coordinate system, wherein the transformed image coordinate system corresponds to the reference model coordinate system and the images parts associated with the coordinates of overlaid boundary being projected to the predefined coordinates of the corresponding boundary of the structural element in the reference model coordinate system;
f) a second adjustment to adjust an overlaid boundary of the structural elements of the at least one part of the reference model over the transformed image to approximate the boundary of the at least one part within the body in the transformed image by adjusting coordinates of control elements associated with the structural element representative of the at least one part in the reference model in the transformed image coordinate system;
g) a second transformation wherein image parts associated with coordinates of the adjusted overlaid boundary of the at least one part are projected in the transformed image to the predetermined coordinates of the corresponding boundary of the structural element representative of the boundary of the at least one part in the reference model coordinate system.
   The invention is based on the recognition that for routine clinical application of volume conduction based methods it is necessary that the patient specific adaptations can be done fast and that comparison of electrical phenomena at the corresponding positions in different patients and control groups is vital. Furthermore, that it is very time consuming to make a new mesh providing a model of a patient. However, every patient have substantially the same composition having different sizes and thus different relative positions in real world coordinates. The idea is to link coordinates of an image to coordinates in a reference model by means of a number of consecutive image transformations. By means of the transformations every point in the reference model has an unique point in the image space or real world space. This enables us to use one specific reference model, for example the boundary of the body, for all patient and that this reference model can be transformed into a surface model that approximates the body of the patient. Having such an reference model enable to add different meshes or models to the same part of a body. Furthermore, the relation of the different models of parts is known as they use all the same reference model coordinate system.
   The method can briefly be described as overlaying the largest structural element of reference model over an image. Adjusting the boundaries defining the largest structural element such that the boundary approximates the corresponding boundary in the input image and then transforming the area defined by the boundary to correspond to the same dimensions in the reference model space. Then the same procedure is repeated for a lower level of sub element which composition corresponds to the area of the largest element.
   In an embodiment of the invention, the first and second transformation uses tri-cubic interpolation methods. Cubic equations are preferred because it is the lowest order for which continuity can be guaranteed and the curvature at the control points can be controlled.
   In an embodiment, the control elements are Bezier control points and the first and second transformation is based on a Bezier transformation. Bezier formulation of controlling the cubic splines was chosen because it is intuitive, creating smooth curves and surfaces is easy because of the control of the derivatives and the chances of inadvertently creating self-intersecting curves and surfaces is less than for instance with interpolating splines or with Hermite descriptions because you have to position control points far from the initial position for that to happen.
   In an embodiment of the invention, the largest structural element of the reference model is represented by a unit cube which is associated with the boundary of the body, the largest structural element comprises an assembly of smaller structural elements, the unit cube being divided in smaller sub cubes, wherein each sub cube is assigned to one smaller structural element and a part within the body is associated with one or more sub cubes. These features provide a very structured and simple structure of structural element to describe the reference model. This ensures that volumes of dedicated models associated with a structural element will not intersect in real world coordinates of a patient with volumes of dedicated models of structural elements adjacent to said structural element. The use of unit cube as the reference space follows logically from the conventional Bezier description. Cutting parallel to sides enables a simple bounding box approach for finding the smallest body part in the model reference space that a specific point belongs to.
   In an embodiment, the largest structural element defines a boundary which boundary represents an approximation of the boundary of the body and the boundary of an assembly of one or more sub cubes represents an approximation of the boundary of a part within the body. This is a very suitable structure for a reference model for a patient.
   In an embodiment, a part within the body has one or more associated reference meshes describing a boundary of said part in the reference model coordinate system. Defining the models and meshes in a reference space enables application of said meshes and models to all patients for which a transformation from patient space to reference space has been defined.
   In an embodiment, a part within said body comprises a sub-part and a structural element representative of said part is a composition of sub structural elements, a sub structural element comprises control elements associated with a boundary representative of said sub part, the method further comprises:
h) a sub adjustment to adjust an overlaid boundary of the sub structural elements over the transformed image to approximate the boundary of said sub part within the body in the transformed image by adjusting coordinates of control elements associated with the sub structural element representative of the sub-part;
i) a sub transformation wherein the image area in the transformed image associated with the structural element comprising the sub part is processed and the edge of said image part remains unchanged in the transformed image and wherein image parts associated with coordinates of the adjusted overlaid boundary of the sub part are projected in the transformed image to the predetermined coordinates of the corresponding boundary of the sub structural element in the reference model coordinate system. The adjustment and transformation actions can be repeated on sub-subelements which composition corresponds to the total area of one of the sub elements. An advantage of this method is that with every transformation the sub-parts within the structural element that is transformed are positioned in the transformed image more accurately at the position of the structural elements of said sub-parts within the reference model. This simplifies the adjustment of the boundary of the sub-parts in the transformed image. This makes the method according to the invention very intuitive and easy to handle. Furthermore, this makes the method suitable to find the boundaries of parts in the image automatically and to fit the overlaid boundary automatically.

Another advantage is that the applied transformation in the image area of a structural element to transform a sub-structural element does extend to the boundary of the image area of said structural element. Consequently, the image parts outside said boundary remains unchanged. This implies a stacked transformation, wherein the number of stacked transformations depends on the number of layers of structural elements used to obtain the transformed image.

In an embodiment, the method further comprises storing data defining the first and second transformation to enable transformation of spatial models associated with the reference model to real world coordinates to provide an anatomical model for the living being in real world coordinates. Storing patient specific transformation data and linking it to the reference model, enables us to create a new model for a structural element and to verify the new model for every patient based on the transformation data. Furthermore, the amount of data related to a patient can be reduces as for example a specific mesh for a part of the body have to be stored once.

In an embodiment, the reference model comprises further electrical characteristics of respective part within the body, the method further comprises determining a volume conduction model for use in algorithms that relate surface potentials to electrical event within the body. Because a reference based model can be used for every patient, more effort could be made available to develop a more accurate model. This enables us to provide a patient specific model based on the more accurate reference based models to generate by means of the inverse transformation a more accurate electrical description of the patient for us in ECG, EEG, EMC and MCG analysis algorithms.

With volunteers the whole body can be scanned. A good solution would be to scan one or more subjects in great detail and use the derived reconstruction as a for the patient-specific description. This implies that the mesh will not be constructed from scratch from the MRI data but that a generic mesh is used and deformed until it fits the data.

It is another object of the invention to provide a computer implemented system for mapping an image to a reference model, the system comprising a processor and memory connected to the processor, the memory comprising a computer program comprising data and instructions arranged to allow said processor to perform any of the methods according to the invention.

It is yet a further object of the invention to provide a program product in a computer readable medium for use in a data processing system for mapping an image to a reference model, the computer program product comprising instructions arranged to allow a processor to perform any of the methods according to the invention.

### Short description of drawings

The invention will be explained in detail with reference to some drawings that are only intended to show embodiments of the invention and not to limit the scope. The scope of the invention is defined in the annexed claims and by its technical equivalents.
Figure 1 shows a flow chart of a basic process according to the invention;
Figures 2a - 2d illustrate schematically the mapping of an image to a reference model;
Figures 3a - 3d illustrate schematically an implementation of the method according to the invention;
Figure 4 illustrates the relation between a body surface model and Bezier control points;
Figure 5 is a block diagram of an exemplar computer system for implementing the method according to the invention and,
Figure 6 illustrates a reference body surface model and two exemplary transformations of said reference body surface model.

### Detailed description of exemplary embodiments

Before describing the invention in more detail a definition of terms will be given:
- inverse computation: any technique to estimate electrical properties of the heart from surface recordings using volume conduction models;
- mesh: any set of points and their connections used to describe either a surface or a volume in 3D;
- imaging modality: a technique to measure internal structure like MRI, CT or echo;
- structural element: part of a patient or associated part of reference model in patient coordinates and/or abstract space coordinates. The largest structural element corresponds to the physical structure, i.e. entire body. A structural element can be subdivided in smaller structural elements (e.g. rectangular blocks);
- transformation: (possibly non-linear) mapping of relative coordinates to patient coordinates (e.g. Bezier) or deformation of image defined in a coordinate system;
- patient coordinates: coordinate system that was used to define points in real world space using the imaging modality;
- abstract coordinates: conveniently chosen coordinate system that is common to all models and patients;
- relative coordinates: local coordinate system within structural element;
- X space: the space defined in X coordinates. patient space is the physical space that can be described in patient coordinates.

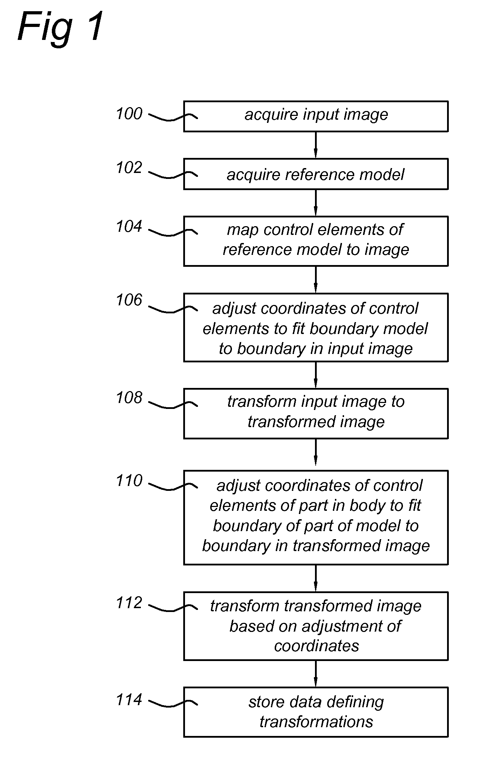

Figure 1 shows a flow chart of a basic process according to the invention to match an anatomical image to a reference model having a reference model coordinate system. The process starts with action 100, acquiring an input image and action 102, acquiring a reference model. The input image can be any data captured by an imaging modality and suitable to visualize in two or more dimensions at least a part of a cross section of an organism, i.e. an animal, plant or human being. The image can be an MRI-scan data, CT-scan data, echo scan or any other sensed data suitable to visualize a cross section or part of an organism. An image according to the present invention can be a 2D image, 2½D-image (= stack of 2D slices) or a 3D-image wherein each pixel represents a volume (=voxel). The image comprises associated data to determine real-world dimensions within the organism. In the following description, the torso of a human being is used as an example of a cross section or part of an organism. The invention is can be used to model any part of a body which can be defined by layers of structural elements wherein a structural element representing apart of the organism comprises smaller structural elements, which in turn could comprise even smaller structural elements, and so on.

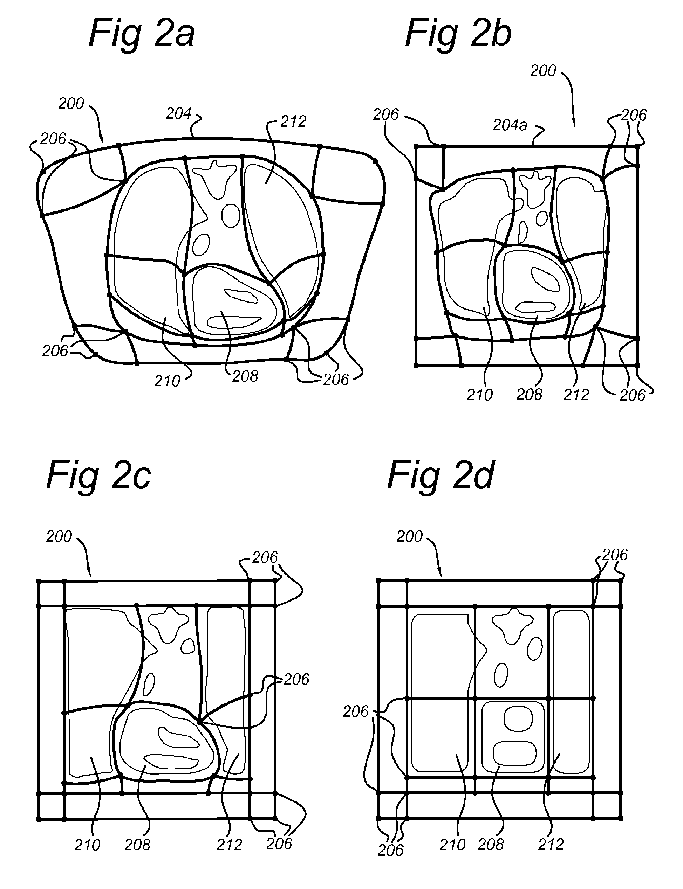

The reference model is an abstract description of a part of a living being, for example the upper part of a torso. The abstract space defined by the reference model is divided at a number of levels of details, preferably with cutting planes or lines along the major axes to divide the abstract space. Preferably, in abstract space every model of a structural element can be approximated by a cubical or cuboid which is defined by the cutting planes. For example, the upper part of a torso is in a reference model represented by a cubical. In the cubical of the torso is a smaller cubical which represents volume inside the rib cage. The space in the reference model between the cubical of the torso and the cubical of the volume inside the rib cage represents the ribs, muscles and fatty tissue amassed under the hide, The cubical of the volume inside the rib cage is divided into cuboids representing the lungs, which could be a stack of four cubicles or cubes each, a cubical representing the space of the heart, a cubical below the heart representing the space of the tissue below the heart and a cubical above the heart representing the space of the tissue above the heart between the lungs. The cubical representing the heart could be subdivided into a cubical representing the volume of the left ventricle and a cubical representing the volume of the right ventricle. Figure 2d shows an example of a reference model described above.

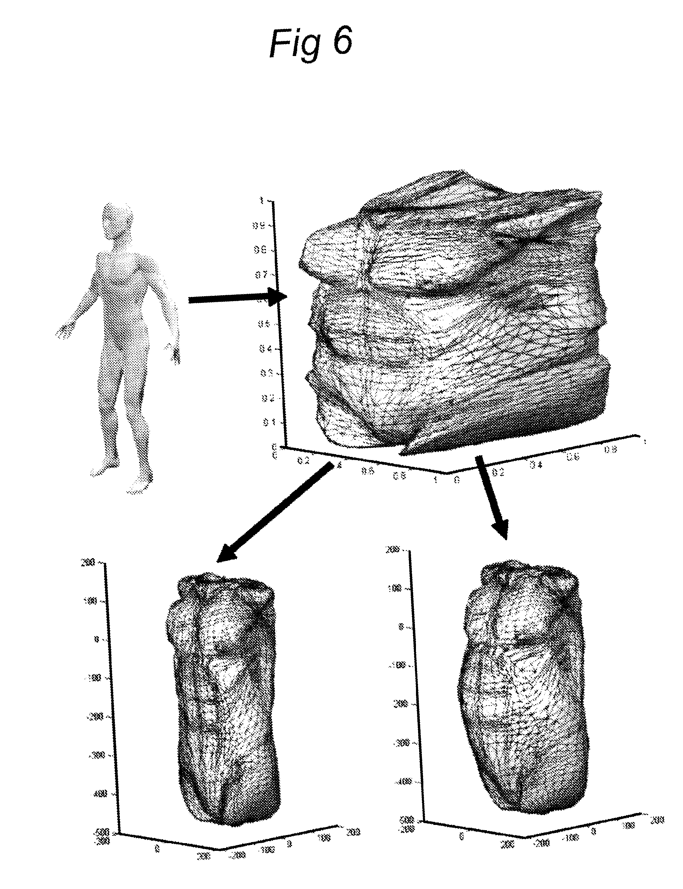

Every cubical representing a structural element of the reference model could comprise one or more associated model descriptions. For example, the cubical of the torso has one or more surface models of the torso, wherein each model could have a different mesh and triangulation. However, each model is defined in the same reference coordinate system. Figure 6 shows a surface of the torso that fits into a cubical. The cubical representing the heart could comprise an associated 300-vertex triangulation of the heart, a 2400-vertex description of the heart, or any other suitable surface or volume description (i.e. triangular and quadrangular meshes, tetrahedrons, hexahedrons etc), a model of the fiber orientation, a model of the fiber orientation changes inside a deformed ventricle wall, a mechanical model of the heart, etc. A requirement is that all the associated models use the same reference model coordinate system to address positions in the abstract model space. Furthermore, corresponding points (e.g. the apex of the left ventricle or the midpoint of the tricuspid valve) in each associated model will have the same coordinates in the reference model coordinate system. Each structural element of the reference model comprises control elements. A control point has a defined position in the reference model and represents a characteristic of the corresponding part of the body, for example the outline of the structural element, a specific point, for example the apex of the left ventricle, of the structural element which could be identified in an image. The control elements are used to define a relation between coordinates of an image, which is captured by an imaging modality, and the reference model, and to specify the transformation to transform/deform the image from one coordinate system to another coordinate system.

In action 104, the control elements and boundary of the largest structural element of the reference model are mapped on the input image. This could be done by hand or automatically. Furthermore in action 104 coordinates in the image reference system are assigned to the control elements. At this stage, the control elements defines the relation of said positions in the image space and the reference model space. In an embodiment, firstly the image is adapted to have coordinates in the same range as the reference model. This could be done by a linear transformation including translation, rotation and scaling. The performed adaptation which could be expressed in an equation defining the relation between a coordinate in the image and corresponding coordinate in the adapted image, is stored as associated transformation data to enable the back transformation from scaled image to original image and/or the calculation of image coordinates to real word coordinates. After scaling the same coordinates are used in the image and the reference model to identify a position in both the image and reference model. It should be noted that in stead of adapting the range of coordinates from the image to the range of coordinates in the reference model, the range of coordinates in the reference model could be adapted to fit the range of coordinates in the image.

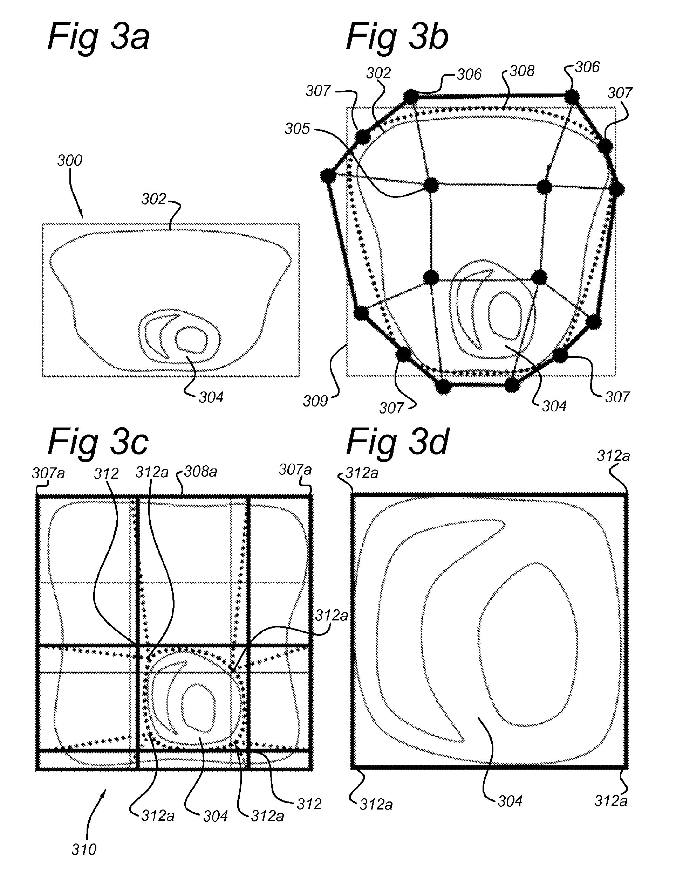

Then in action 106 the coordinates of the control elements are adjusted such that the boundary of the structural element fits the boundary of the corresponding structural element in the image. When the structural elements are cubicles in the reference model, the control elements could be Bezier control points. The Bezier control points define a line in 2D and a surface in 3D. Figure 3b illustrates action 106. The dots 305, 306, and 307 of the mesh are the Bezier control points. After action 104, 12 Bezier control points are on the cubical 309. Four control points are on the angle points and eight control points are equidistant distributed along the edges. Figure 3b shows how the control points 307, 306 have to be adjusted to define a contour 308 which approximates the contour of the body in the image. The contour 308 is an adjusted boundary which is obtained by using the Bezier transformation. The control point 307 corresponds to the control points which position was on the angle point of the square 309.

In action 108, the image area within the boundary 308 is transformed to obtain an transformed image. Preferable the transformation uses tri-cubic interpolation commonly known to the skilled person in the art. The transformed image has coordinates in a transformed coordinate system which corresponds to reference model coordinate system. It should be noticed that the transformation projects the control points from adjusted coordinates to the original coordinates in the reference model coordinate system. Thus the image parts associated with the control elements are projected to the predefined coordinates in the reference model coordinate system. By this action the contour 308 is transformed into a cubical. Figure 3c illustrates where the image parts corresponding to the control points 307 in figure 3b are projected in the transformed image. The coordinates of control points 307 are projected to a position in the transformed image corresponding to reference numeral 307a respectively.

Figure 2a illustrates how the control elements 206 of a reference model are mapped on an image showing a body 200. In this example the control elements correspond to the angular points of the cubicles of the structural elements of the reference model and the lines between control points correspond to the ribs forming the cubicles. The figure shows further the right lung 210, the heart 208 and the left lung 212. Figure 2b illustrates the result after performing the action 104, 106 and 108. The body 200 is now fit into a squared image. The contour 204 of the body is now on the edge of the image 204a. The control points 206 having a position in the body have a position in the squared image. The transformation performed should be a unique transformation wherein every point in the original image shown in figure 2a has one and only one corresponding point in the transformed image shown in figure 2b. In an embodiment a cubic Bezier type interpolation, known to the person skilled in the art, is used to transform the image of figure 2a in to the image shown in figure 2b.

Figures 3a, 3b and 3c illustrate another example of performing the actions 104, 106 and 108. Figure 3a shows the contour 302 of a body 300 and a heart 304 in the body. Figure 3b shows the image after performing action 104. Overlaid are the control elements which corresponds in this example to the 16 Bezier control points 305, 306, and 307 after performing action 106. Prior to performing action 106, the control point 307 where on the angle points of the image and the control points 306 at the edge of the image. By adjusting the coordinates of the control elements 306, 307, the contour 308 defined by the control elements changes. Control elements 305 can either be automatically interpolated or adjusted by hand. The position of the control elements is adjusted such that the contour 308 approximates the contour of the body 302.

Then action 108 is performed, wherein the image part within the contour 308 is transformed into a squared image. The edge of the image 308a of the image in figure 3c corresponds the contour 308 in figure 3b. It can be seen that the control elements 307 on the contour 308 in figure 3b are now positioned at the angle points of figure 3c. It can further be seen that the contour of the body in figure 3c is now also more brick shaped. Also the heart, which is a structural element in the body, has been more cubical which provides a good starting point for performing the action 110.

In action 110, the control elements of the largest structural element in the reference model are adjusted such that the boundary of said structural element fits or approximates the boundary of the image area for which the structural element is representative. In the example shown in figure 2a - 2d, the largest structural element in the reference model represents the rib cage. Figure 2b shows the position of control elements after performing action 110. It should be noted that after performing action 108, the coordinate system of the image corresponds to the coordinate system of the reference model. Therefore, as the coordinates of the control elements by action 108 are mapped on their original predefined coordinates in the reference model, the position of the control elements defining the rib cage defining the cubical in the reference model have the same position in the image when starting action 110, and would be represented as a cubic in the image when laid over the image.

Then in action 112, the image is transformed such that the pixels according to the control elements having the adjusted coordinates are positioned on the original predefined coordinates of the control elements in the reference model. Action 108 makes use of the same transformation algorithm as action 108.

Figure 2c illustrates the resulting image after action 108. It can be seen that the lungs 210, 212 have become a more cubical shape. It can further be seen that the structural element corresponding to the rib cage comprises a sub structural element, namely the heart 208. In the reference model, the heart 208 has a corresponding cubical. Action 110 and 112 could be repeated for the structural elements in the rib cage. Thus adjusting the control elements of a smaller structural elements within a current structural element and transforming the image part corresponding to the current structural element based on the adjusted coordinates of the control elements.

Figure 3c illustrates the principle of action 110 and 112. The black solid lines in the image represents the predefined position of the edges of the respective structural elements in the reference model when overlaid over an image have the same coordinate reference system. Then by action 110, the coordinates of control elements 312 having the predefined position are adjusted such that the contour defined by the control elements approximates the contour of the heart 304. References 312a indicates the position after adjustment. The dotted line around the heart illustrates the overlaid contour defined by the control elements 312a. Then by action 112, the areas within the dotted lines, representing the edges between structural elements but with adjusted control elements 312a coordinated are adjusted such the image part at the position of the adjusted control element is projected on the predefined position of the control element in the reference model. Consequently, the image parts defined by the dotted lines are transformed to fit in the rectangles areas defined by the black solid lines. Figure 3d illustrates the image area of the heart after performing the action 112. It can be seen that the shape of heart 304 in the image approximates a cubical.

In action 114, data defining the preformed transformations on the structural elements is stored as associated data. The associated data enables a computer program to reconstruct the original image corresponding to a structural element from the transformed image. The number of transformations needed to reconstruct the original image part of a structural element depends on the number of larger structural elements said structural element is in. For example, the structural element heart is in the structural element rib cage, which is in structural element body. Therefore, to reconstruct the original image of the heart in image 2d, transformation data related to the transformation of the structural elements in the rib cage is needed, the transformation data related to the transformation of the rib cage in the body is needed and the transformation of the body to patient coordinates is needed. The associated data corresponds to the data needed to reconstruct figure 2c from 2d, to reconstruct figure 2c from 2b and reconstruct figure 2a from figure 2b.

The above described method is easy and intuitive to use. The method provides data which makes it possible to find a point in patient space, defined by the input image, from a point in the abstract space defined by the reference model and vice versa. Furthermore, the model allows to define different levels of detail. It is further possible to project people having different body size and having internally different relative position and shapes of organs and even the internal structures of the organs on the same reference model.

Every structural element contains information where the control elements of points are within the relative coordinate system of the containing level as well as the positions of the control points within its own relative coordinate system. In stead of the position in relative space of the next level up, the top level will contain the positions of its control points in patient space.

To find a point in patient space from a point in abstract space all hierarchical structural elements that contain the point are found. Starting at the top level the positions in patient space of the control points of the next lower level are computed. Having the control points in patient space the transformations in this structural element can now be applied to find the coordinates in patient space of the control points in the level below that were defined in relative coordinates with respect to this element. With every step the control points get closer to the point and the organ it is in gets better defined.

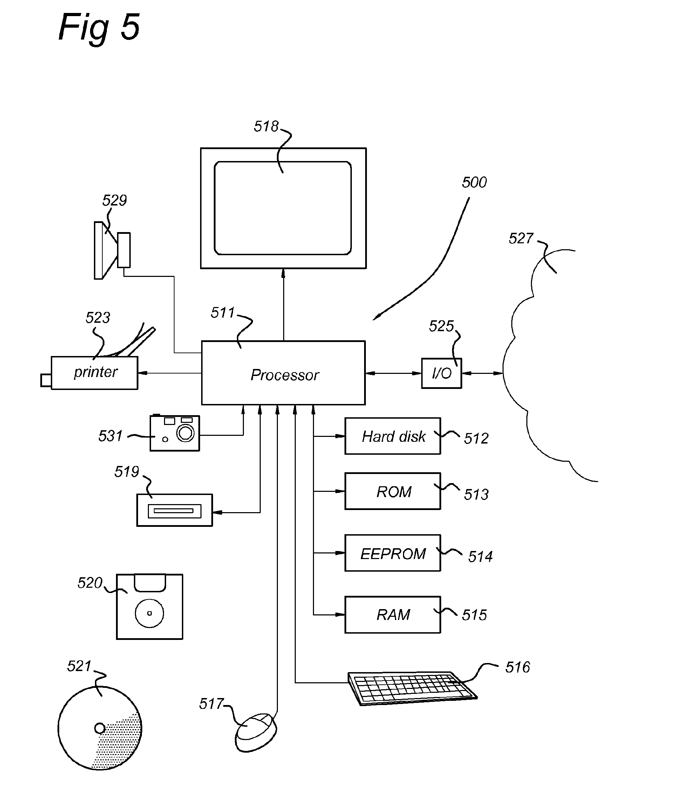

In figure 5, an overview is given of a computer arrangement 500 suitable for implementing the present invention. The computer arrangement 500 comprises a processor 511 for carrying out arithmetic operations. The processor 511 is connected to a plurality of memory components, including a hard disk 512, Read Only Memory (ROM) 513, Electrical Erasable Programmable Read Only Memory (EEPROM) 514, and Random Access Memory (RAM) 515. The memory components comprises a computer program comprising data, i.e. instructions arranged to allow the processor 511 to perform the method for generating a spatial-data-change message or the method for processing a spatial-data-change message according to the invention. Not all of these memory types need necessarily be provided. Moreover, these memory components need not be located physically close to the processor 511 but may be located remote from the processor 511. The digital reference model database associated with the methods may or may not be stored as part of the computer arrangement 500. For example, the digital reference model database may be accessed via web services.

The processor 511 is also connected to means for inputting instructions, data etc. by a user, like a keyboard 516, and a mouse 517. Other input means, such as a touch screen, a track ball and/or a voice converter, known to persons skilled in the art may be provided too.

A reading unit 519 connected to the processor 511 may be provided. The reading unit 519 is arranged to read data from and possibly write data on a removable data carrier or removable storage medium, like a floppy disk 520 or a CDROM 521. Other removable data carriers may be tapes, DVD, CD-R, DVD-R, memory sticks, solid state memory (SD cards, USB sticks) compact flash cards, HD DVD, blue ray, etc. as is known to persons skilled in the art.

The processor 511 may be connected to a printer 523 for printing output data on paper, as well as to a display 518, for instance, a monitor or LCD (liquid Crystal Display) screen, head up display (projected to front window), or any other type of display known to persons skilled in the art.

The processor 511 may be connected to a loudspeaker 529 and/or to a capturing device 531for obtaining image data, such as a MRI-scanning device, CT-scanning device, Ultrasound scanning device (echo), digital camera/web cam or a scanner, arranged for scanning graphical and other documents.

Furthermore, the processor 511 may be connected to a communication network 527, for instance, the Public Switched Telephone Network (PSTN), a Local Area Network (LAN), a Wide Area Network (WAN), Wireless LAN (WLAN), GPRS, UMTS, the Internet etc. by means of I/O means 525. The processor 511 may be arranged to communicate with other communication arrangements through the network 527.

The data carrier 520, 521 may comprise a computer program product in the form of data and instructions arranged to provide the processor with the capacity to perform a method in accordance to the invention. However, such computer program product may, alternatively, be downloaded via the telecommunication network 527 into a memory component.

The processor 511 may be implemented as a stand alone system, or as a plurality of parallel operating processors each arranged to carry out subtasks of a larger computer program, or as one or more main processors with several sub-processors. Parts of the functionality of the invention may even be carried out by remote processors communicating with processor 511 through the telecommunication network 527.

The components contained in the computer system of Figure 5 are those typically found in general purpose computer systems, and are intended to represent a broad category of such computer components that are well known in the art.

Thus, the computer system of Figure 5 can be a portable device, a personal computer, a workstation, a minicomputer, a mainframe computer, etc. The computer can also include different bus configurations, networked platforms, multi-processor platforms, etc. Various operating systems can be used including UNIX, Solaris, Linux, Windows, Macintosh OS, and other suitable operating systems.

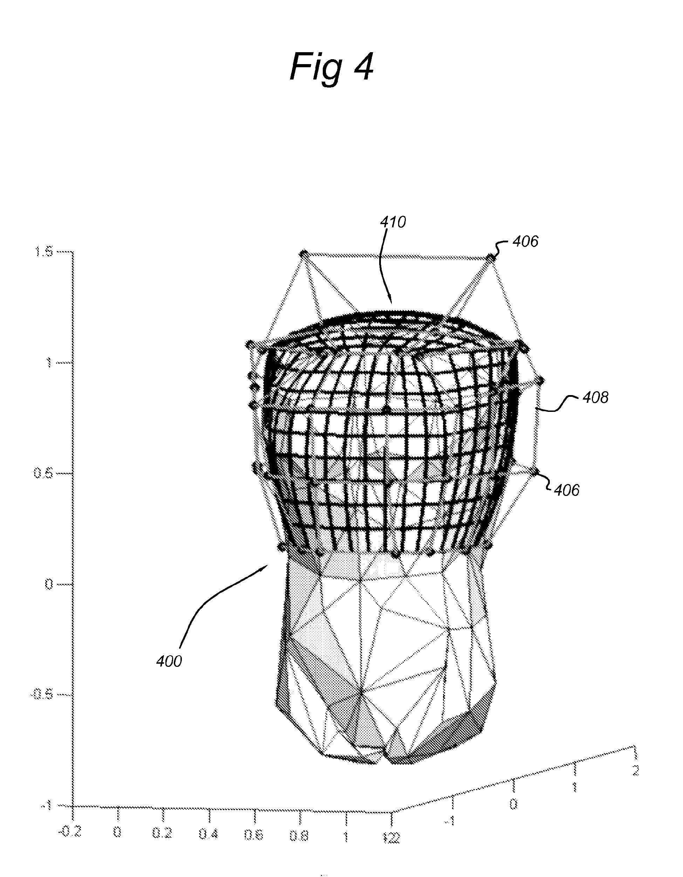

The solution presented here is based on the concept that corresponding points (e.g. the apex of the left ventricle or the midpoint of the tricuspid valve) in each subject will have the same generic abstract coordinates in a model reference space. The generic coordinates have values between 0 and 1 in all three dimensions. The space that defines these generic points is deformed in a continuous fashion using tri-cubic interpolation to match the patient. We have chosen Bezier-style definition of the deformation. Cubic Bezier splines have 4 control points, in 2D, Bezier surfaces are described by 16 points, see figure 3b, and for 3D 64 control points are required, see figure 4. The method allows for the transformation from generic to image coordinates and vice versa, as long as the volume is not self-intersecting. To be able to independently adjust the shape of the various internal organs a hierarchical approach is chosen, see figures 2 and 3. In this approach first the surface of the torso is matched, see figure 2a and 3b, thereby getting the internal organs shown in the image in approximately the correct position in the reference model space. Figure 2b shows the approximated positions in the reference model coordinate system and figure 2d shows the final positions in the reference model coordinate system. Then, using internal organs like the lungs and liver as a reference the position of the heart is defined, see figure 2b and figure 3c. Finally the details of the heart itself are adjusted. This is illustrated by figures 2c and 2d.

To generate a patient-specific anatomical model requires a number of steps. First we select a cube in imaging coordinates that will fit around the torso. Bezier control points from another model are loaded to get a rough approximation of the torso boundaries. This cube is deformed using the 64 Bezier control points to fit the torso to the generic mesh. Bezier coordinates in general run from zero to one, so this procedure gives a unit cube where every point within corresponds to a unique point in imaging space inside the patient. This unit cube is now divided in smaller cubes, the largest one of these will be used to describe the volume inside the rib cage. This block has generic coordinates of, say, 0.1 to 0.9 along the x and y axis and 0.3 to 0.9 along the z axis. Using the Bezier control points of the entire torso it is possible to compute the imaging coordinates that correspond to the 64 control points that define this cube. The relative repositioning of these control points within the Bezier framework is known so we can now in the <0.1,0.1,0.3> to <0.9,0.9,0.9> range of generic coordinates compute the imaging points by using tri-cubic interpolation twice. For the heart itself there is a subcube within the ribcage block, so that adds another level of detail. The torso could be contained in a larger cube that contains the entire body, so there could actually be also another level on top.

An interesting consequence of this technique is that the reference meshes for the heart, the lungs, and the torso all are approximately brick-shaped in the generic coordinates in a reference model coordinate system (see e.g. Figure 2d).

To compute a point in the imaging coordinate system of the patient from the generic coordinates also takes a number of steps. First, for the top cube the normalized coordinates are matched to the imaging coordinates. Using the Bezier deformation the imaging coordinates of the 64 control points of its sub-cubes can be computed. This tree traversal is required only once for an individual patient. Computing an imaging point from a reference model coordinate is by finding the smallest cube that contains this coordinate and applying the Bezier transformations performed on the smallest cube and transformations performed on the larger cubes which encompass the smallest cube.

The proposed mapping algorithm facilitates adaptation of specific generic models for specific applications. Moreover, it greatly facilitates inter-subject comparisons of anatomy in a quantitative manner. The invention enables software engineers to write specific software to support the matching of this generic model to MRI and CT data.

Various meshes for the body surface, heart, and lungs have been converted to coordinates in a model reference system. Applying the individual transformations gives the individually matched surfaces. Figure 6 shows in the top left a male figure from Poser 5 (Curious Labs, http://e-frontier.com). After exporting, the head and extremes were removed and the surface model of the Poser 5 torso was deformed to fit into the unit cube in generic coordinates of the reference model coordinate system (top right). A first individual-specific transformation definition was used to fit the model to the MRI data from a patent and the inverse transformation result of the surface model of the Poser 5 torso by means of the individual specific transformation definition is shown at the bottom left. Another individual specific transformation, corresponding to a slightly thicker patient, was used to convert the surface model of the Poser 5 torso to the surface model in patient coordinate as shown at the bottom right side. Both specific transformation definitions could be obtained by the actions 100 - 108 described above.

Within this framework we can now compute activation times in a triangular mesh by e.g. an inverse calculation and put that timing in a mechanical model to find the order of contraction. We can even compare this to the actual movement that was measured by tagged MRI on a point by point basis.

The presented method could be performed automatically on image data. The method could be used in a semi-automatic or manual process. In an embodiment, the method comprises the automatic step to position the control points such that a first approximation of the boundary of one or more structural elements is given. The operator will examine the approximated boundaries of the one or more structural elements and correct if necessary the boundary by changing the position of the control points in the image. The operator could further verify whether selected reference models for different structural elements to be used in further analysis when transformed to patient space complies with natural constrains. For example surface triangulations for ECG analysis or the heart and lungs should not intersect in patient space.

It should be noted that the method described above assumes that a reference model is available, which comprises for a structural element one or more associated reference meshes describing the boundary of a part of a body. The invention is also very useful to develop such meshed. Image processing algorithms could be used to determine the boundary of said parts in the images. Subsequently, the boundary is transformed to the reference model coordinate system. Having the boundary of several patients in the reference model coordinate system, an average boundary could be generated and a corresponding mesh with triangulation could be generated and linked to the reference model in the reference model database. An advantage of the present invention is that it is now possible to start medical analysis based on rough or old models and that it will be possible to perform the same medical analysis but then on more accurate or new models. It is also possible to perform statistical or sensitivity analysis on variations in a reference model on the analysis results.

The foregoing detailed description of the invention has been presented for purposes of illustration and description. It is not intended to be exhaustive or to limit the invention to the precise form disclosed, and obviously many modifications and variations are possible in light of the above teaching. The described embodiments were chosen in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. Method of linking coordinates of an image to coordinates of a reference model, the method comprising:
a) acquiring an input image representing a boundary of a body of a living being and a boundary of at least one part within said body in an image reference system, coordinates in the image having a relationship with a real world reference system;
b) acquiring a reference model representative of a reference living being describing in a reference model coordinate system the boundary of the body of the reference living being and the boundary of at least one part within said body, wherein the reference model comprises structural elements representative of the boundary of the body and the at least one part, a structural element having associated control elements, the control elements having predefined coordinates in the reference model coordinate system and defining the boundary of the structural element in the reference model coordinate system;
c) overlaying control elements and corresponding boundary of the structural element representative of the body on the input image, and assigning coordinates in the image reference system to the control elements;
d) a first adjustment to adjust the overlaid boundary of the structural element representative of the body on the input to approximate the boundary of the body of the living being in the input image by adjusting the coordinates of the control elements associated with said structural element in the image reference system;
e) a first transformation to transform the image area corresponding to the adjusted overlaid boundary to obtain an transformed image, the transformed image having coordinates in a transformed image coordinate system, wherein the transformed image coordinate system corresponds to the reference model coordinate system and the image parts associated with the coordinates of overlaid boundary being projected to the predefined coordinates of the corresponding boundary of the structural element in the reference model coordinate system;
f) a second adjustment to adjust an overlaid boundary of the structural elements of the at least one part of the reference model over the transformed image to approximate the boundary of the at least one part within the body in the transformed image by adjusting coordinates of control elements associated with the structural element representative of the at least one part in the reference model in the transformed image coordinate system;
g) a second transformation wherein image parts associated with coordinates of the adjusted overlaid boundary of the at least one part are projected in the transformed image to the predetermined coordinates of the corresponding boundary of the structural element representative of the boundary of the at least one part in the reference model coordinate system.

2. Method according to claim 1, wherein the first and second transformation uses tri-cubic interpolation methods.

3. Method according to claim 1 or 2, wherein the control elements are Bezier control points and the first and second transformation is based on a Bezier transformation.

4. Method according to claim 1, wherein the largest structural element of the reference model is represented by a unit cube which is associated with the boundary of the body, the largest structural element comprises an assembly of smaller structural elements, the unit cube being divided in smaller sub cubes, wherein each sub cube is assigned to one smaller structural element and a part within the body is associated with one or more sub cubes.

5. Method according to claim 4, wherein the largest structural element defines a boundary which boundary represents an approximation of the boundary of the body and the boundary of an assembly of one or more sub cubes represents an approximation of the boundary of a part within the body.

6. Method according to claim 1, wherein a part within the body has one or more associated reference meshes describing a boundary of said part in the reference model coordinate system.

7. Method according to claim 1, wherein a part within said body comprises a sub-part and a structural element representative of said part is a composition of sub structural elements, a sub structural element comprises control elements associated with a boundary representative of said sub part, the method further comprises:
h) a sub adjustment to adjust an overlaid boundary of the sub structural elements over the transformed image to approximate the boundary of said sub part within the body in the transformed image by adjusting coordinates of control elements associated with the sub structural element representative of the sub-part;
i) a sub transformation wherein the image area in the transformed image associated with the structural element comprising the sub part is processed and the edge of said image part remains unchanged in the transformed image and wherein image parts associated with coordinates of the adjusted overlaid boundary of the sub part are projected in the transformed image to the predetermined coordinates of the corresponding boundary of the sub structural element in the reference model coordinate system.

8. Method according to claim 1, further comprising j) storing data defining the first and second transformation to enable transformation of spatial models associated with the reference model to real world coordinates to provide an anatomical model for the living being in real world coordinates.

9. Method according to claim 8, wherein the reference model comprises further electrical characteristics of respective part within the body, the method further comprises determining a volume conduction model for use in algorithms that relate surface potentials to electrical events within the body.

10. A computer implemented system for linking coordinates of an image to coordinates of a reference model, the system comprising a processor (511) and memory (512; 513; 514; 515) connected to the processor, the memory comprising a computer program comprising data and instructions arranged to allow said processor (511) to perform any of the methods according to claims 1 - 9.

11. A computer program product in a computer readable medium for use in a data processing system, for linking coordinates of an image to coordinates of a reference model, the computer program product comprising instructions arranged to allow a processor to perform any of the methods according to claims 1 - 9.
